# EUROPEAN PATENT APPLICATION

(11) **EP 1 482 420 A1**
(43) Date of publication of application: **01.12.2004**
(21) Application number: 04001583.6
(22) Date of filing: 26.01.2004
(51) Int. Cl.: G06F 17/30

(54) **System and method for processing data of measurement instruments**

(30) Priority: 30.05.2003 US 449651
(71) Applicant: Agilent Technologies, Inc., Palo Alto, CA 94306 (US)
(72) Inventor: Abramovitch, Daniel Y., Palo Alto CA 94306 (US)
(74) Representative: Liesegang, Roland, Dr.-Ing.

(57) **Abstract**

Systems and methods process instrument data in a data representation that is widely accessible. By enabling such accessibility, the instrument data is retained in a form that is independent of the instrument that originated the data, the operating system associated with the retrieval of the data, the processing applications that post-process the instrument data, and/or the like. In one embodiment, a method for processing instrument data comprises: retrieving instrument data from an instrument (201); encoding the instrument data within an extensible mark-up language (XML) file (203); and translating the XML file into a file format of a selected one of a plurality of post-processing applications (205).

## Description

### FIELD OF THE INVENTION

Embodiments in accordance with the invention are directed to systems and methods for processing instrument data.

### BACKGROUND OF THE INVENTION

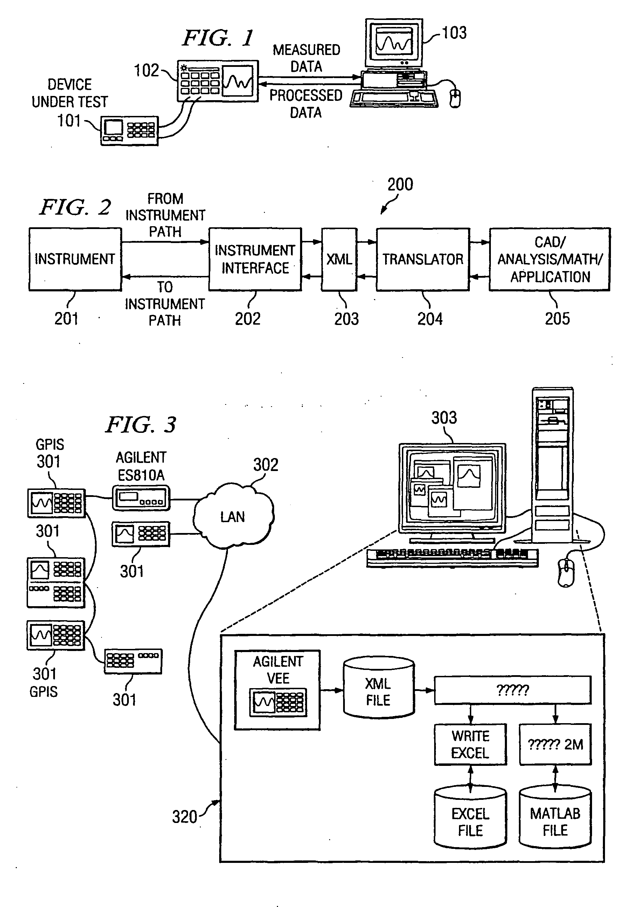

At the present time, instrument data may be generated by utilizing a relatively large number of devices. FIGURE 1 depicts a typical instrumentation set-up that generates, archives, and/or processes instrument data. The set-up includes device under test (DUT) 101 which could be as simple as a circuit or as complex as an optical communication system. Depending upon the type of measurement being performed, instrument 102 may also generate a stimulus for DUT 101 to enable the user to have a greater understanding of the measurement process and the response of DUT 101. Instrument 102 performs data sampling (possibly including analog-to-digital conversion and other analog processing). The sampled data may be uni-dimensional or multi-dimensional. The raw data may be subjected to some sort of post-processing (e.g., frequency domain transforms and/or windowing). The post-processing may be performed by either instrument 102 or computer 103. The raw data and/or the post-processed data may be stored on computer 103 for several purposes. The data may be displayed to the user via a suitable graphics application. Alternatively, the data may be stored on computer 103 for archival purposes.

The process of transferring the data is performed utilizing well-known device driver software techniques. Specifically, each instrument 102 comprises proprietary functionality that enables instrument 102 to be controlled by communicating messages over a suitable physical interface (e.g., a General Purpose Instrument Bus (GPIB), a Universal Serial Bus (USB), IEEE-1394 bus, and/or the like). Alternatively, the instrument manufacturer may provide a set of software libraries that constitute an Application Program Interface (API) against which the user may write their own application code. Instrument 102 may possess network connectivity and may be controlled by messages communicated via the Internet Protocol (IP). The proprietary functionality of instrument 102 that responds to control messages necessitates a proprietary device driver. The proprietary functionality of instrument 102 and the proprietary device driver performs the tasks of exchanging the sampled and/or post-processed data from instrument 102 to computer 103. The data is "wrapped" within the standardized communication protocol data packets.

When the data is accessed at a later time, the user must know from what device the data was captured and the particular data format involved to make use of the data. Over the short term and for small numbers of instruments, this does not present an unacceptable amount of difficulty, because the user that made the initial measurements will most likely be available. However, after the particular instrument 102 is discarded with any related documentation, the archival data may become useless because of the proprietary and typically arbitrary data format used for the particular instrument 102. Moreover, when a relatively large number of instruments are utilized, there is a significant amount of difficulty retaining all of the data in different formats.

Moreover, at the present time, the ability to post-process instrument data is quite limited. Specifically, one known instrument interface application enables instrument data to be retrieved from an instrument and provided to a Matlab window. However, there is no capability to automatically provide data to other applications that may be more suitable for a particular tasks as desired by the user.

### BRIEF SUMMARY OF THE INVENTION

Embodiments in accordance with the invention are directed to systems and methods for providing a standardized format for the representation of instrument data without dependence upon the device-under-test, the instrument utilized to capture the data, or the archival system used for data storage. Embodiments in accordance with the invention advantageously utilize a suitable meta-language (e.g., the extensible mark-up language (XML)) representation of data. By defining an XML schema, a Document Type Definition (DTD), or the like for instrument data, the captured data may be contained in a data representation that avoids the requirement of knowing the proprietary details for every instrument utilized by an organization over the course of time. Specifically, the XML schema or DTD enables users to understand the nature of the captured data in a relatively straight-forward manner without requiring the user to resort to dated documentation of a particular instrument.

Additionally, by utilizing a standardized format for the representation of instrument data, embodiments in accordance with the invention enable analysis and suitable processing of data from a wide variety of instruments to occur utilizing a wide range of software applications with minimal complexity. Specifically, any instrument may generate a universally accessible XML file by utilizing embodiments in accordance with the invention. Based upon the universally accessible XML file, a suitable parsing program may parse the XML file to retrieve the instrument data and a suitable translator program may provide the data to any number of post-processing applications (such as Matlab, Mathematica, Excel, StarCalc, OpenCalc, and/or the like). Furthermore, data processed by any of the post-processing applications may be encoded within an XML file. The processed data from the XML file may be returned to the originating instrument or another instrument to control further operations of the instrument as appropriate for a given application.

The foregoing has outlined rather broadly the features and technical advantages of embodiments in accordance with the invention in order that the detailed description of embodiments in accordance with the invention that follows may be better understood. Additional features and advantages of embodiments in accordance with the invention will be described hereinafter which form the subject of the claims of embodiments in accordance with the invention. It should be appreciated by those skilled in the art that the conception and specific embodiment disclosed may be readily utilized as a basis for modifying or designing other structures for carrying out the same purposes of embodiments in accordance with the invention. It should also be realized by those skilled in the art that such equivalent constructions do not depart from the spirit and scope of embodiments in accordance with the invention as set forth in the appended claims. The features which are believed to be characteristic of embodiments in accordance with the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of embodiments in accordance with the invention.

### BRIEF DESCRIPTION OF THE DRAWINGS

For a more complete understanding of embodiments in accordance with the invention, reference is now made to the following descriptions taken in conjunction with the accompanying drawings, in which:

FIGURE 1 depicts an instrument set-up according to the prior art;

FIGURE 2 depicts a processing flow for processing instrument data that may be performed by embodiments in accordance with the invention;

FIGURE 3 depicts a system for processing instrument data that may be implemented by embodiments in accordance with the invention;

FIGURE 4 depicts an XML file generated by embodiments in accordance with the invention;

FIGURE 5 depicts an Excel file generated from the XML file shown in FIGURE 4 by embodiments in accordance with the invention;.

FIGURE 6 depicts an Excel graph generated from the Excel file shown in FIGURE 5;

FIGURE 7 depicts a Matlab file generated from the XML file shown in FIGURE 4 by embodiments in accordance with the invention; and

FIGURE 8 depicts a Matlab graph generated from the Matlab file shown in FIGURE 7.

FIGURE 9 depicts several portions of XML code that may be generated by embodiments in accordance with the invention.

### DETAILED DESCRIPTION OF THE INVENTION

As previously noted, representative embodiments utilize XML to encode representations of instrument data in a manner that is universally accessible. XML is a meta-language, i.e., a language from which other languages may be created. By defining a language specific for instrument data, the structure of the instrument data may be retained over time. Specifically, each item of data within an XML file may be correlated to a defined meaning by use of appropriate tags and a suitable schema or DTD as examples. Moreover, XML is designed to be exchanged via the Internet thereby resulting in a data representation that is operating system independent and platform independent. XML is similar in construction to the hypertext mark-up language (HTML). XML is advantageous as compared to HTML, because it separates the formatting of a document from the description of the associated data.

In general, XML files are based upon American Standard Code for Information Interchange (ASCII) and contain data within pairs of tags that are user-definable. To facilitate the user-definition of tags, XML files are coupled to a method of describing their content and/or structure. In an older form of such description, document type definitions (DTD) are utilized and may be included within the XML file or in an external file. More recently, schemas have been utilized to describe the content and structure of XML files. XML schemas express shared vocabularies to enable document rules to be defined. XML schemas are advantageous, because XML schemas are written in XML, support more data types, are extensible, and support namespaces.

Embodiments in accordance with the invention utilize schemas or DTDs to support data from a variety of instruments. For example, a spectrum analyzer may provide one or more vectors of real values at a specified set of frequency values. The values may correspond to power spectrum, power spectral density, or similar characteristics of the measured quantities. Alternatively, network analyzers may compare the output signals with the input signals yielding both magnitude values and phase information. In the frequency domain, the instrument data takes the form of one or more vectors of mathematically complex values. Similarly, a real time digital oscilloscope stores measurement of data in a fundamentally different way than a sampling oscilloscope. Also, the measurements may be performed according to one or several channels depending upon the particular instrument and/or its mode of operation.

Embodiments in accordance with the invention utilize XML schemas or DTDs to describe the structure of a variety of data types and/or data structures. The XML schemas or DTDs enable users to generate customer translator programs (as will be discussed in greater detail below) to enable instrument data to be provided to any number of post-processing applications. Additionally, parser programs (as will be discussed in greater detail below) may be self-configurable for a particular instrument by first reading the schema or DTD associated with an XML file associated with a particular XML file.

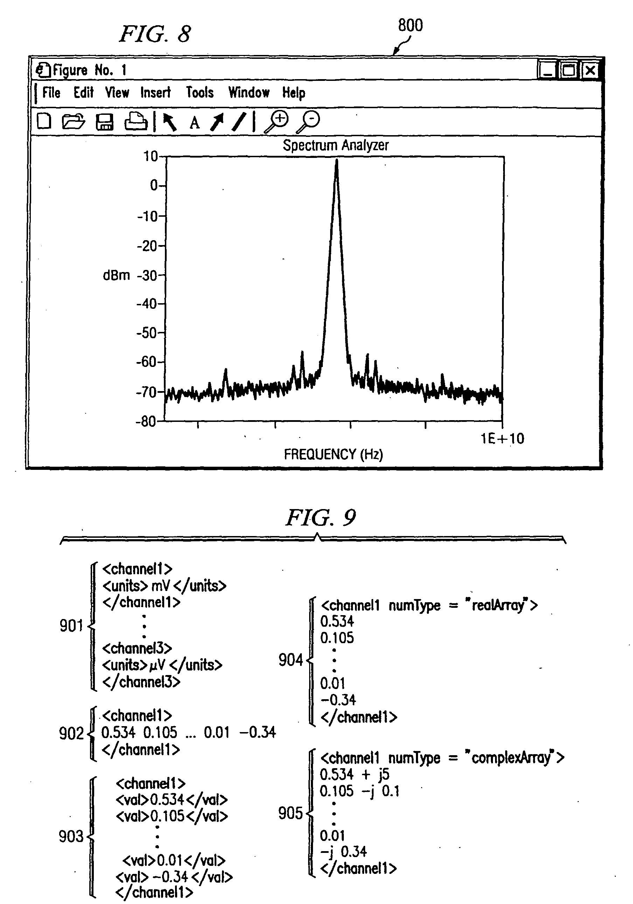

Embodiments in accordance with the invention may utilize a suitable XML schema or DTD to define tags that represent instrument data in manner that facilitates parsing of the instrument data from associated XML files For example, the tag pair and data "<xScale> xScale value </xScale>" may be defined in a schema or DTD where xScale value denotes the actual value of the parameter. Furthermore, the tag pair and data "<units> unit value </units>" may be defined to assign the value (e.g., "dBm") of the units. Also, instrument data quite often contains multiple channels of captured data. Suitable tags (e.g., <channell>, <channel2>, ... <channelN>) may be defined in a schema or DTD to enable a parser program to identify instrument data within respective channels. Different parameters may be associated with different channels of data. Nesting of tags with the channel tags may facilitate the appropriate definition of channel parameters when a parser is implemented to parse nested tags. For example, the following tag structure may associate the units "mV" and "µV" with different channels: <channel1><units>mV</units>...</channel1>...<channel3><units>µV</units>... </channel3> which is also shown in XML portion 901 of FIGURE 9.

Instruments typically generate arrays of data, i.e., multiple data samples associated with each sampling period over a given amount of time. Quantities that contain arrays of values can be encoded within tag pairs in a variety of ways defined in a schema and/or DTD. One way to represent an array of data is to utilize simple tags. The following array structure (also shown in XML portion 902 of FIGURE 9) could be defined in a schema or DTD and the parser program would be responsible for separating the delimited values from the arraysstring of values: <channell>0.534 0.105...0.01 -0.34</channel1>. Alternatively, nested tags (such as the following example and as shown in XML portion 903 of FIGURE 9) and a suitably implemented parser may be utilized to encode arrays of data: <channell><val>0.534</val><val>0.105</val>
... <val>0.01</val><val>-0.34</val></channell>. Utilizing a nested tag format for an array facilitates the identification of the encoded data as an array and can be encoded in a schema. Another method to indicate to the parser that there is array data is by using attributes in the tag, as shown in XML portion 904 and 904 of FIGURE 9. In this case, the attribute value would indicate to the parser what type of data was in the tag. Note that this has less overhead than the method in portion 903 of FIGURE 9. The attribute need not be explicitly listed with the data if the schema or DTD includes a default attribute with the desired value. The parser, upon reading the schema or DTD would configure itself to parse the data according to the default attribute.

As previously noted, the received instrument data may contain mathematically complex values. The parsing program may be implemented to identify the complex values. For example, the complex values may take to form of (a + bi) where a is the real portion, b is the imaginary portion, and i (which alternatively could be replaced by j) denotes the square root of - 1. Suitable delimiters may be utilized to separate the complex values such as commas, semi-colons, and/or the like. Alternatively, the complex values could be represented by an ordered pair (e.g., (a,b), <a,b>, and/or the like). Moreover, complex tags with attributes ― pertaining to data with complex structure ― may be defined in a schema or DTD to facilitate the encoding of arrays of data. For example, the tags <channell numType="realArray"> and <channell numType= "complexArray"> (as shown in XML portions 904 and 905 of FIGURE 9) may be defined to facilitate the encoding of arrays of real data and the encoding of complex values, respectively. It is noted that a "complex tag" refers to an XML tag associated with a complex data structure and that the attribute value "complexArray" refers to complex values in the mathematical sense in the instrument data. Also, the attribute values "realArray" or "complexArray" could be defined as default attribute values in a schema or DTD thereby enabling the user to omit the explicit recitation of the attribute value for the default case. For example, the tag <freqarray> may be used to define an array of frequency data from a spectrum analyzer or the like. Because the array of data from a spectrum analyzer contains real values, a default attribute in the schema or DTD may be associated with the <freqarray> tag to define the format of the data in the array. Likewise, a default attribute value for mathematically complex values of an array may associated with the tag <freqresponse> in a schema or DTD.

So far, the discussion of encoding data has referred to encoding schemes that utilize ASCII encoding. Other encoding mechanisms may be employed with embodiments in accordance with the invention. Arrays of data may be encoded utilizing the Base64 format that enables binary information to be encoded in XML. Likewise, the Scalable Vector Graphics (SVG) or any other suitable data format may be utilized to encode arrays of data. Complex tags with attributes ― pertaining to data with complex structure ― may be defined in a schema or DTD to facilitate the encoding of arrays of data (e.g., an ASCII attribute value, a Base64 attribute value, an SVG attribute value, and/or the like may be defined to specify the encoding format of data within an array). Also, a default value may be defined in a schema or DTD for the encoding format.

It shall be appreciated that the definition of these types of tags is merely exemplary. Any other tags and tag attributes may be defined to facilitate the encoding of data in XML files utilizing embodiments in accordance with the invention.

Embodiments in accordance with the invention may utilize a number of mechanisms to implement the encapsulation of instrument data within XML files. For example, embodiments in accordance with the invention may utilize the Document Object Model (DOM), which is a generic programming interface, the Simple Application Programming Interface for XML (SAX), which is another programming interface, the XSL Transformation Language (XSLT), XPath, which describes paths to data inside in documents, XPointer, which describes locations of files on the Internet, and/or the like.

FIGURE 2 depicts processing flow 200 for processing instrument data in XML files that may be performed by embodiments in accordance with the invention. At stage 201 of processing flow 200, an instrument may generate instrument data. The instrument data may be formatted according to a proprietary data format for that particular instrument. In stage 202, an instrument interface processes the data previously encoded according to the proprietary data format. Specifically, general purpose software (such as VEE from Agilent Technologies and Labview from National Instruments) utilize "instrument drivers" which codify the behavior and data of supported instruments. The low-level interface software enables users to write custom code in a variety of computer languages to enable the instrument data to be obtained and processed as desired. It shall be appreciated that embodiments in accordance with the invention are not limited to any particular interface or instrument access method. Any suitable interface may be utilized.

The instrument interface at stage 202 obtains the data and encodes the data as an XML file for stage 203 according to an appropriate XML schema and/or document type description (DTD). Stage 203 represents the storage of the instrument data in a universally accessible data format, e.g., XML. The accessibility of the data format is advantageous for a number of reasons. First, the accessibility is independent of the particular platform that stores or archives the data. Thus, new storage peripherals, new operating systems, and/or the like do not affect the accessibility of the instrument data contained with the XML representation. Moreover, the accessibility enables export of the instrument data to a wide variety of post-processing applications as desired by the user with a minimal amount of complexity. Specifically, in stage 204, translator software program may parse an XML file according to the respective schema or DTD to generate a file adapted according to a selected post-processing application.

Embodiments in accordance with the invention may enable the processing of instrument data between instruments and post-processing applications to be bi-directional. That is, post-processed data may be retrieved from suitable application files from stage 205. The retrieved data may be translated at stage 204 and a corresponding XML file may be generated for stage 203. The universally accessible data representation of the XML file may be provided to an appropriate instrument interface (stage 202) and communicated to a suitable instrument (stage 201) to control further operations of the instrument and/or the device-under-test.

By employing the processing flow shown in FIGURE 2, embodiments in accordance with the invention advantageously enable the aggregation of data from very different types of instruments. Embodiments in accordance with the invention enable the aggregated data to be processed by any post-processing application that is appropriate for the particular data. Furthermore, embodiments accordance with the invention enable the communication of data between those different types of instruments.

FIGURE 3 depicts system 300 that utilizes embodiments in accordance with the invention. A plurality of instruments 301 are shown coupled to local area network (LAN) 302 or any other suitable network (e.g., the Internet), although the plurality of instruments 301 could be directly attached to computer 303. The instruments may be any suitable instrument ranging from complex instruments (e.g., spectrum analyzers, network analyzers, etc.) to unconventional devices such as a low-complexity sensor combined with a suitable processor and communication interface, a cell phone with firmware the places measurement data within the overhead of call transmission packets, and/or the like. Specifically, any device that is capable of performing a measurement and communicating the associated data may constitute an instrument in accordance with embodiments of the invention. The plurality of instruments 301 may implement various interfaces such as the General Purpose Instrument Bus (GPIB), USB buses, and/or the like. GPIB/LAN connections may be utilized to translate between protocols used by the GPIB buses and the LAN.

General purpose computer (e.g., a personal computer) 303 receives and processes instrument data from the plurality of instruments 301 utilizing the data structures and software modules shown in block 320. Specifically, embodiments in accordance with the invention may employ VEE application 304 (alternatively a Labview application or any other suitable application) to access data from one or several of the plurality of instruments 301. The VEE application generates XML file 305 from the instrument data. It shall be appreciated that XML file 305 need not necessarily be written to disk storage. XML file 305 may be retained in any suitable memory such as random access memory (RAM) if desired. Because XML file 305 was generated according to a known schema or DTD, parser 306 (e.g., a PERL script) reads XML file 305 and extracts appropriate tags to access the instrument data without regard to the originating instrument and without regard to the operating system associated with computer 303. It shall be appreciated that embodiments in accordance with the invention are not limited to any particular parsing functionality. Any suitable string, other text processing libraries, or other suitable software functionality may be utilized to implement the parsing functionality as desired. Other examples of parsing functionality include JAVA classes, "expat" parser routines, custom code written in C or C++, and/or the like.

Parser 306 enables the instrument data to be provided to any one of a number of post-processing applications. For example, the PERL WriteExcel software module 307 may create Excel file 309 from the parsed data to enable an Excel application to manipulate or suitably process the instrument data. Alternatively, a PERL module (shown as Perl2Mat 308) may be written to allow PERL to create a Matlab file 310 from the parsed data to enable a Matlab application to manipulate or suitably process the instrument data. The various applications may perform desirable processing. For example, the charting functionality of the Excel application may be utilized to create appropriate visual presentations of the instrument data. Alternatively, various mathematical transforms and/or the like may be performed by the Matlab application as appropriate for a given application. PERL WriteExcel software module 307 and Perl2Mat 308 are driver utilities used by parser 306 to facilitate translation of the parsed data into file formats for the respective applications. PERL WriteExcel software module 307 is a publicly available software module. Perl2Mat 308 is a custom software module created for the purpose of translating the parsed data into the file format of Matlab.

Embodiments in accordance with the invention may be employed for any number of applications. For example, embodiments in accordance with the invention may be utilized to archive instrument data thereby enabling the interchange between "ancient" instruments and modem post-processing programs. Moreover, the instrument data originally generated by the "ancient" instruments and suitably post-processed may be utilized to control "modem" instruments as appropriate.

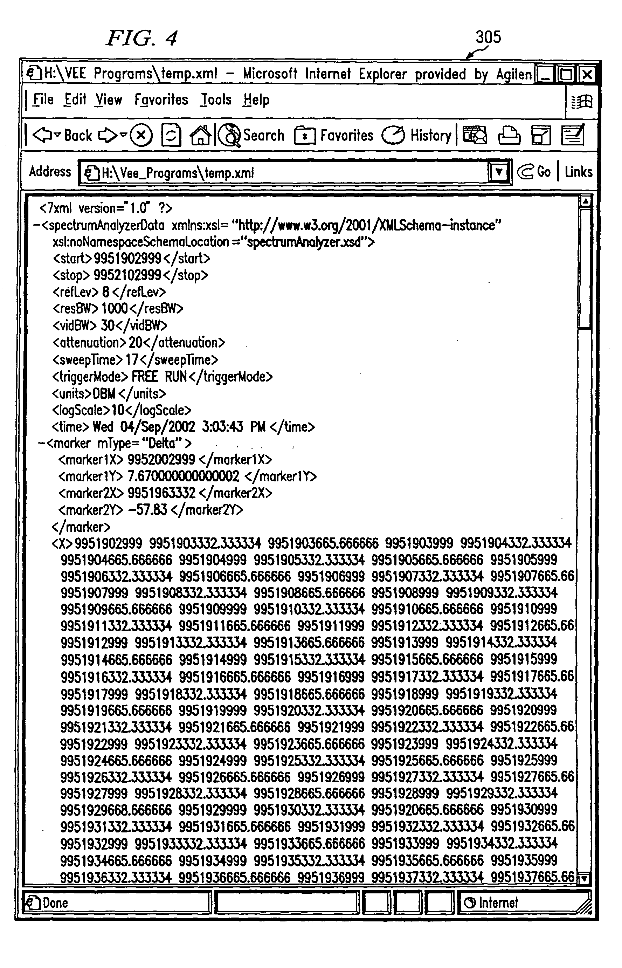

FIGURE 4 depicts a browser display of XML file 305 generated by embodiments in accordance with the invention. As shown in FIGURE 4, XML file 305 retains the "human-readable" characteristics of the instrument data. Specifically, the tags, the tag structure, the tag attributes, and the encapsulation of the data within the tags enable users to understand the meaning of the data without resorting to proprietary documentation for the originating instrument. This is in appreciable contrast to the column separated value (CSV) format used by many instrument interfaces.

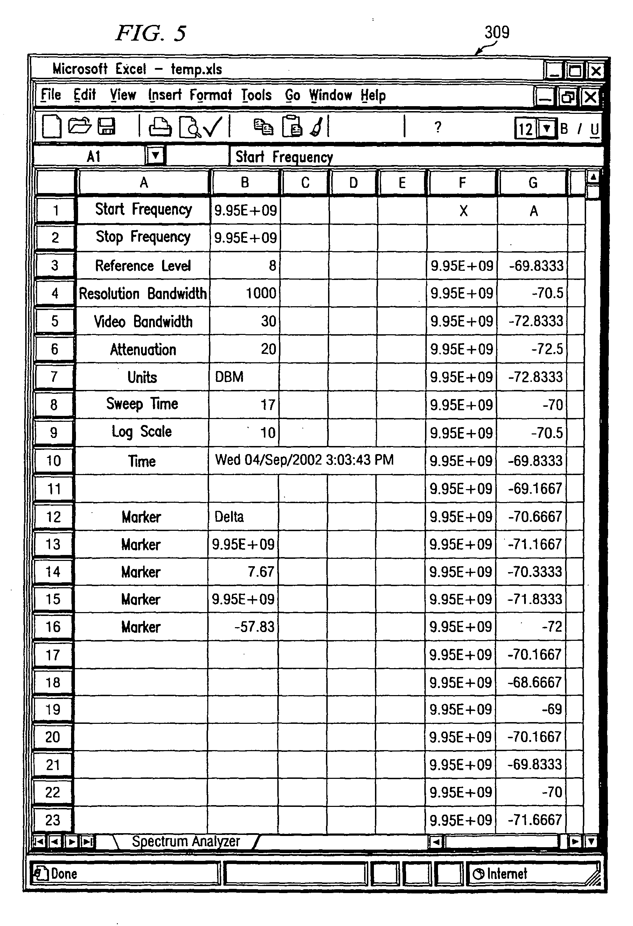

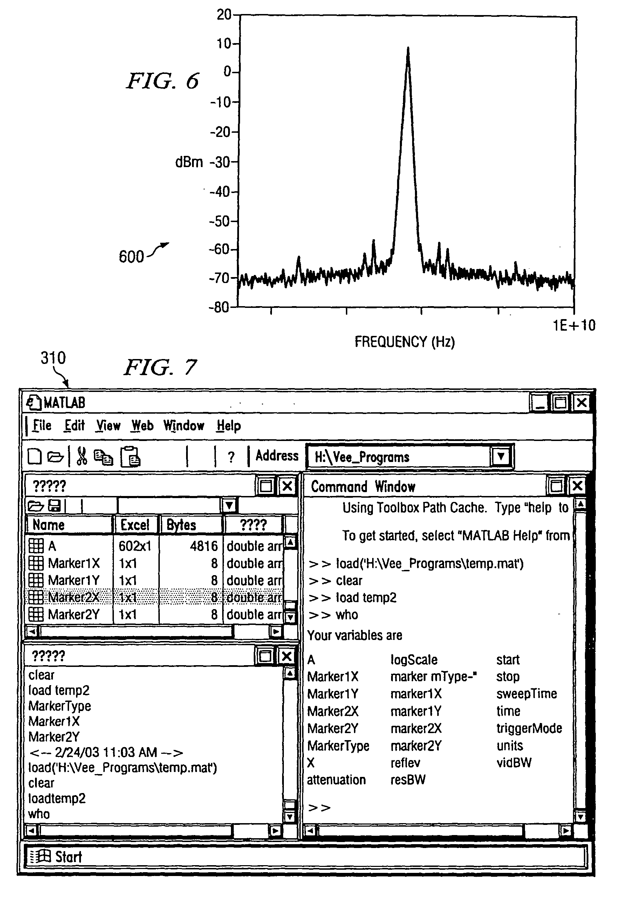

By encoding XML file 305 according to a suitable schema or DTD, XML file 305 may be parsed to create files for one or several of a plurality of post-processing applications. For example, the Excel spreadsheet application is viewed as being advantageous for representing data in a format that is appropriate for business or other commercial uses. FIGURE 5 depicts a display of Excel file 309 that was generated from XML file 305 by embodiments in accordance with the invention. As shown in FIGURE 5, Excel file 309 retains the structure of the original instrument data which remains in a "human-readable" form. The instrument data in Excel file 309 may be processed by any of the capabilities of the Excel application. For example, Excel graph 600 (as shown in FIGURE 6) may be generated from the instrument data in Excel file 309.

Embodiments in accordance with the invention further enable the instrument data encapsulated in XML file 305 to be exported to other instruments depending upon the particular processing capability desired or the user's personal preferences. For example, a user may desire to utilize the signal processing functionality of the Matlab application to process the instrument data. Embodiments in accordance with the invention may translate XML file into Matlab file 310 as shown in FIGURE 7. Again, the structure of the original instrument data is maintained in a human-readable form. Any of the processing capabilities of the Matlab application may be used to process the exported data. For example, graph 800 as shown in FIGURE 8 may be generated from the instrument data in Matlab file 310 utilizing the graphing capabilities of the Matlab application.

Embodiments in accordance with the invention may further enable distributed measurement systems. For example, cellular units within a cellular system may make various measurements according to varying firmware capabilities. The firmware may encode the measurement data in suitable XML files in accordance with the invention to account for the differing firmware capabilities. Similarly, an aggregation of sensors may collect suitable measurements and communicate those measurements via the Internet. The measurements may be encoded with universally accessible XML files. By encoding the data in this manner, data gathered from geographically dispersed sensors with varying capabilities may be analyzed according to any number of advantageous combinations for varying purposes as desired.

By enabling instrument data to be gathered from a variety of instruments and provided to any number of post-processing applications, embodiments in accordance with the invention provide a number of advantages. Specifically, the intermediate and universally accessible data representation of the XML files enables an instrument interface to write a single type of file. Based on that file, any specific file format may be generated for post-processing applications with a minimal degree of complexity. The ability to utilize any of a number of post-processing applications is advantageous, because commonly available post-processing applications have broad sets of processing tools and algorithms, have scripting languages to facilitate repetitive tasks, have sophisticated graphing and output capabilities, and enable post-processing to occur on any accessible platform independent of where the original measurements were made. Additionally, the range of capabilities of post-processing applications varies considerably. Thus, embodiments in accordance with the invention advantageously enable a user to select a desired post-processing application that is most suitable for the instrument data to be processed and for the user's preferences. Embodiments in accordance with the invention further advantageously enable the data from the post-processing applications to be returned to the originating instrument (or another instrument) for further processing. The returned data may be utilized to control further operations as appropriate for a given activity associated with the respective instrument.

Although embodiments in accordance with the invention and its advantages have been described in detail, it should be understood that various changes, substitutions and alterations can be made herein without departing from the spirit and scope of embodiments in accordance with the invention as defined by the appended claims. Moreover, the scope of embodiments in accordance with the invention is not intended to be limited to the particular embodiments of the process, machine, manufacture, composition of matter, means, methods and steps described in the specification. As one skilled in the art will readily appreciate from the disclosure of embodiments in accordance with the invention, processes, machines, manufacture, compositions of matter, means, methods, or steps, presently existing or later to be developed that perform substantially the same function or achieve substantially the same result as the corresponding embodiments described herein may be utilized according to embodiments in accordance with the invention. Accordingly, the appended claims are intended to include within their scope such processes, machines, manufacture, compositions of matter, means, methods, or steps.

Although the present invention and its advantages have been described in detail, it should be understood that various changes, substitutions and alterations can be made herein without departing from the invention as defined by the appended claims. Moreover, the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method for processing instrument data, comprising:
obtaining instrument data from an instrument (301);
encoding said instrument data within a meta-language file (305); and
translating said meta-language file into a file format (309, 310) of a selected one of a plurality of post-processing applications.

2. The method of claim 1 further comprising:
storing a file in said file format of a selected one of a plurality of post-processing applications;
processing data in said stored file utilizing said selected one of said plurality of post-processing applications;
translating said processed data into another meta-language file; and
utilizing data in said another meta-language file to control further operations of said instrument.

3. The method of claim 1 or 2 wherein said meta-language file is an extensible mark-up language (XML) file.

4. The method of one of claims 1 to 3 wherein said encoding includes encoding an array of instrument data within respective tags (901, 902, 903).

5. The method of claim 4 wherein said respective tags are associated with an attribute value that defines the format of the data in said array.

6. The method of claim 5 wherein said attribute value is a default value defined in an item selected from the list consisting of: a schema and a Document Type Definition (DTD).

7. The method of claim 6 wherein said format defines said data in said array as being mathematically complex values.

8. A system for processing instrument data, comprising:
a software interface (304) for obtaining instrument data from an instrument, wherein said software interface encodes retrieved instrument data in respective meta-language files;
a parsing software module (306) for parsing instrument data from meta-language files; and
a plurality of translator software modules (307, 308) for translating parsed instrument data into respective files for each of a plurality of post-processing software applications.

9. The system of claim 8 wherein said.plurality of translator software modules are operable to convert files stored according to respective formats for each of a plurality of post-processing software applications into data to be converted into meta-language files.

10. The system of claim 9 wherein said software interface further retrieves data from said converted meta-language files to be communicated to said instrument.
